# EUROPEAN PATENT SPECIFICATION

(11) **EP 0 803 199 B1**
(45) Date of publication and mention of the grant of the patent: **13.11.2002**
(21) Application number: 97660050.2
(22) Date of filing: 22.04.1997
(51) Int. Cl.: A23K 1/18, A23K 1/16, A23K 1/24, A23L 1/30

(54) **Procedure and fodder for the production of hen's eggs having an advantageous fatty acid composition**
Verfahren und futter zur erzeugung von hühnereier mit vorteilhafter fettsäure-zusammensetzung
Procédé et fourrage pour la production d'oeufs de poule avec une composition améliorée d'acides gras

(30) Priority: 26.04.1996 FI 961785
(43) Date of publication of application: 29.10.1997
(73) Proprietor: SUOMEN REHU OY, 00240 Helsinki (FI)
(72) Inventor: Kiiskinen, Tuomo, 31600 Jokioinen (FI); Helander, Eija, 00780 Helsinki (FI); Haarasilta, Asko, 01600 Vantaa (FI)
(74) Representative: Papula, Antti

(56) References cited:
- EP-A- 0 157 619
- WO-A-88/10112
- WO-A-95/21539
- DE-A- 4 314 899
- GB-A- 2 266 652
- US-A- 5 133 963
- JOURNAL OF FOOD SCIENCE, vol. 54, no. 6, 1 November 1989, pages 1457-1460, 1484, XP000085497 LIN C F ET AL: "EFFECTS ON DIETARY OILS AND X-TOCOPHEROL SUPPLEMENTATION ON LIPID COMPOSITION AND STABILITY OF BROILER MEAT"

## Description

The present invention relates to a foodstuff as defined in the preamble of claim 1.

Hen's eggs used as foodstuff contain plenty of cholesterol, which causes an increase in the concentration of cholesterol in blood. A high cholesterol content of blood increases the risk of cardiovascular diseases (arteriosclerosis). As is known, omega-3 polyunsaturated fatty acids improve the HDL/LDL ratio of blood. Therefore, in view of cardiovascular diseases, the presence of omega-3 polyunsaturated fatty acids in foodstuffs is desirable and recommendable. These fatty acids include α-linolenic acid (C18:3ω3), which is present in linseed oil (50-60 %) and turnip rape oil (10-15 %), and EPA (eicosapentaenic acid C20:5ω3) and DHA (docosahexaenic acid C22:6ω3), which are present in fish oil. However, increasing the proportion of these fatty acids in the fat in egg yolk is not easy because they may involve problems regarding preservability and taste, due to their susceptibility to oxidation.

From patent applications DE 4314899, WO 95/21539 and JP 63237745 it is known hen fodders containing unsaturated fatty acids and hen's eggs produced with said fodders. However, in said references it is not disclosed in which extension the hen's eggs contain the disclosed unsaturated fatty acids and specially, which kind of fatty acids and with which contents the fodders contain them.

The object of the present invention is to produce a new type of hen's egg which has an advantageous fatty acid composition, i.e. an egg that contains polyunsaturated fatty acid, which for instance improves the proportion HDL/L of blood and reduces the total fatty acid contents of blood.

As for the features characteristic of the invention, reference is made to the claims.

The foodstuff of the invention, hen's egg, contains α-linolenic acid and antioxidant to prevent oxidation of the α-linolenic acid. α-linolenic acid is a polyunsaturated fatty acid which belongs to the so-called good fatty acids and is necessary for the human body. However, long-chain polyunsaturated fatty acids are susceptible to oxidation, which is why an antioxidant is added to the egg. According to the invention the amount of α-linolenic acid contained in the fat in the egg is 3-15 %, more appropriately 5-12 %, preferably 7-11 %.

The antioxidant may be any known antioxidant that can be added via fodder, e.g. vitamin E, ethoxyquin, butyl hydroxytoluene (BHT), BHA, TBHQ, propyl gallate or some other known suitable antioxidant. The amount of vitamin E contained in the egg of the invention may be for instance 2 - 6 g/egg or higher.

An elevated amount of α-linolenic acid and/or antioxidant in the egg may be obtained by feeding hens with fodder that contains an elevated amount of α-linolenic acid and/or antioxidant.

The fodder to be used contains 0.5 - 15 wt-%, more appropriately 1 - 10 wt-%, preferably 2 - 6 wt-% α-linolenic acid plus antioxidant to prevent oxidation of the α-linolenic acid . In addition to α-linolenic acid, the fodder contains conventional amounts of known fodder components, such as carbohydrates, protein, vitamins and/or mineral substances. The source of carbohydrates may be any kind of grain, such as barley, oats, wheat, rye, rye wheat, maize, rice or the like. (0-70 wt-%, generally 10 - 50 wt-%). The protein source may be e.g. soy, fish oil, meat-bone meal or the like. The fodder may also contain other known fodder components.

The α-linolenic acid added to the fodder is preferably linseed oil, linseed groats or other linseed product that contains plenty of α-linolenic acid. The linseed oil used is preferably of Nordic production, because it has been established that linseed oil produced in the Nordic countries has a particularly high α-linolenic acid content.

The amount of antioxidant contained in the fodder of the invention is 0.05 - 1 wt-%, more appropriately 0.1 - 0.6 wt-%, preferably 0.1 - 0.3 wt-%.

In the following, the invention is described by the aid of embodiment examples.

### EXAMPLE 1

This hen feed test was carried out to establish the effect of turnip rape oil, linseed oil and a combination of linseed oil and fish oil on the fatty acid composition, especially the concentrations of omega-3 fatty acids in the yolk of hen's eggs, on the cholesterol and preservability and taste of the eggs during storage.

The test groups were as follows:
- Group 1: No fat added in fodder
- Group 2: Fodder contained 5 % turnip rape oil
- Group 3: Fodder contained 5 % linseed oil
- Group 4: Fodder contained 3 % linseed oil and 2 % fish oil.

The basic fodder into which the fat was added contained 17 % coarsely powdered soy, 48.7 % barley, 25 % oats, 7 % calcium, 1.5 % dicalcium phosphate, 0.4 % table salt, 0.2 % vitamin mixture and 0.2 % micro-nutrient mixture. Moreover, methionine and pigments were added into the mixture. According to the analysis, the amount of crude protein contained in the basic fodder (group 1) was 16.4 %, and in the other groups 16.0 %. The amounts of crude grease were 3.0 % and 7.7 %, respectively.

Each feeding group comprised 6 cages with 3-4 hens in each. At the beginning of the test the hens were 27 weeks old. They were fed freely with the fodder for three weeks before the sample eggs were collected. The eggs were stored in a special egg storeroom at a temperature of 10-12 °C. Samples were taken from the oils and mixtures used in the test. A fodder analysis was performed on the mixtures, and a fatty acid analysis was carried out on the basic fodder and the oils by gas chromatography. The fatty acid analysis was performed on 4 samples, 4 eggs/group. The peroxide value was determined after 3 and 9 weeks of storage from one common 3-egg sample/group and the cholesterol content from two 3-egg samples/group. In addition, three estimations of quality based on sensory perception and a froth formation test were carried out on the eggs at the end of the feeding experiment.

The fatty acid compositions of the oils used in the test are presented in Table 1.

**Table 1.**

| Fatty acid composition of the oils used Percentage in | | | |
|---|---|---|---|
| Fatty acid | Turnip rape oil | Linseed oil | Fish oil |
| C14:0 (myristinic acid) | 0 | 0 | 9.2 |
| C14:1 | 0 | 0 | 0.6 |
| C16:0 (palmitinic acid) | 3.1 | 4.4 | 14.4 |
| C16:1 (palmitoleic acid) | 0.2 | 0 | 7.1 |
| C18:0 (stearic acid) | 1.2 | 1.7 | 1.7 |
| C18:1 (oleinic acid) | 57.7 | 14.2 | 11.3 |
| C18:2 w6 (linolenic acid) | 23.7 | 14.3 | 2.0 |
| C18:3 w3 | 0 | 0 | 4.2 |
| C20:0 | 0.4 | 0.1 | 0 |
| C20:1 (eicosanoic acid) | 0.8 | 0.2 | 11.7 |
| C20:2 w6 | 0.1 | 0 | 0.2 |
| C20:3 w6 | 0 | 0.1 | 0.4 |
| C20:4 w6 (arachidonic acid) | 0 | 0 | 0.3 |
| C20:5 w3 (EPA)¹⁾ | 0.2 | 0.1 | 7.2 |
| C22:1 | 0.1 | 0 | 17.3 |
| C22:6 w3 (DHA)²⁾ | 0.2 | 0 | 0.6 |
| C24:0 (lignoceric acid) | 0.2 | 0 | 10.1 |

| | | | |
|---|---|---|---|
| ¹⁾ A small amount of fatty acid C20:0 A small amount of fatty acid C24:1 | | | |

As can be seen from Table 1, the turnip rape oil contained about 12 % and the linseed oil about 65 % linolenic acid, concentrations that represent the maximum of the tabular values. Each vegetable oil contained some EPA (0.01-0.2 %) and only the turnip rape oil contained DHA (0.2 %). As compared with the vegetable oils, the fish oil contained only a small amount of linolenic acid (1.6 %). The fish oil contained considerably more EPA and DHA, about 7 % EPA and about 10 % DHA. The total amount of omega-3 fatty acids in the turnip rape oil was 12.5 %, in the linseed oil 65.0 % and in the fish oil 18.9 %.

The fatty acid compositions of the fodders used in the test are presented in Table 2. The fatty acid composition of the basic fodder-oil mixtures has been calculated on the basis of the fat content, fatty acid composition and the proportion of the quantities of the components.

The hens were given 152 g of basic fodder and 132-134 g of other fodders a day. The fat consumption was 4.6 g and 10-10.5 g, respectively. That the amount of basic fodder consumed was larger was due to its low energy content.

Table 3 shows the fatty acid composition and the amounts of cholesterol and peroxides contained in the egg yolk. As can be seen from Table 3, adding the oils into the fodder produced clear and significant changes in the amount of certain fatty acids in the yolk fat. Turnip rape oil reduced the proportion of palmitinic acid by two percentage units or about 9 % and linseed oil by 3.4 percentage units (12 %). The effect of linseed oil on the amount of palmitinic acid was statistically significant (P<0.05). By contrast, replacing part of the linseed oil with fish oil reduced the amount of palmitinic acid by only 0.8 percentage units, although the concentration in the fodder was only slightly higher than in the fodder for the linseed oil group (Table 2). Only turnip rape oil produced a reduction in the stearic acid content (P<0.05). The difference as compared with the basic group was 0.9 percentage units (9 %). In the fat of the linseed oil fodder the amount of stearic acid was also lower than in the other fodders. The amount of oleinic acid in the yolk fat was about 9 percentage units (15.5 %) lower in the linseed oil group and in the linseed-fish oil group than in the basic fodder and turnip rape oil groups. Also, the fat in the fodder of the former groups contained the least amount of oleinic acid.

**Table 2.**

| Fatty acid composition (% of the fat)¹⁾ of the fodder mixtures | | | | |
|---|---|---|---|---|
| Fatty acid | 1 Basic fodder | 2 T. rape oil 5 % | 3 Linseed oil 5 % | 4 Lins.oil 3% Fish oil 2% |
| C14:0 | 0.4 | 0.1 | 0.1 | 2.5 |
| C14:1 | 0.3 | 0.1 | 0.1 | 0.3 |
| C16:0 | 28.7 | 22.7 | 13.5 | 16.0 |
| C16:1 | 0.2 | 0.2 | 0.1 | 1.8 |
| C18:0 | 2.4 | 1.7 | 2.0 | 2.0 |
| C18:1 | 29.4 | 47.1 | 19.9 | 19.2 |
| C18:2 w6 | 28.8 | 25.6 | 19.7 | 16.7 |
| C18:3 w3 | 1.8 | 8.2 | 41.3 | 25.5 |
| C18:4 w3 | 0 | 0 | 0 | 1.1 |
| C20:0 | 0.2 | 0.3 | 0.1 | 0.1 |
| C20:1 | 0.8 | 0.8 | 0.4 | 3.3 |
| C20:2 w6 | 0.2 | 0.1 | 0.1 | 0.1 |
| C20:3 w6 | 0.3 | 0.2 | 0.2 | 0.2 |
| C20:4 w6 | 0.6 | 0.2 | 0.2 | 0.3 |
| C20:5 w3 | 1.1 | 0.5 | 0.5 | 2.3 |
| C22:1 | 2.3 | 0.9 | 0.9 | 5.2 |
| C22:6 w3 | 1.9 | 0.8 | 0.7 | 3.2 |
| C24:0 | 0.6 | 0.3 | 0.2 | 0.4 |

| | | | | |
|---|---|---|---|---|
| ¹⁾ The concentrations in mixtures 2-4 were calculated on the basis of the concentrations and mixing ratio of the basic fodder and the oils. | | | | |

The oils added in the fodder increased the proportion of linolic acid in the yolk fat by 1.3 - 1.8 percentage units or 11-15 % (P<0.05). The linolic acid concentration was highest in the fat of the basic fodder, so a low fat content of fodder and a low fat consumption obviously produce a change in this direction.

**Table 3.**

| Fatty acid composition (% of the fat) of the yolk, cholesterol content and peroxide value of the egg. | | | | |
|---|---|---|---|---|
| Fatty acid ¹⁾ | 1 | 2 | 3 | 4 |
| C14:0 | 0.3 | 0.4 | 0.3 | 0.5 |
| C14:1 | 0.1 | 0 | 0 | 0.1 |
| C16:0 (palmit.acid) | 27.9 | 25.9^{ab} | 24.5^{b} | 27.1^{ab} |
| SD | 1.65 | 0.87 | 0.66 | 0.35 |
| C16:1 | 3.0 | 2.7 | 2.7 | 3.0 |
| SD | 0.22 | 0.28 | 0.10 | 0.13 |
| C18:0 (stearic Acid) | 9.2^{b} | 8.3^{a} | 9.7^{b} | 9.4^{b} |
| SD | 0.26 | 0.19 | 0.24 | 0.49 |
| C18:1 (oleinic acid) | 43.7^{b} | 45.0^{b} | 37.9^{a} | 37.1^{a} |
| SD | 1.55 | 0.69 | 0.92 | 1.17 |
| C18:2 w6 (linolic acid) | 12.1^{a} | 13.4^{b} | 13.9^{b} | 13.4^{b} |
| SD | 0.54 | 0.55 | 0.41 | 0.57 |
| C18:3 w3 (linolenic acid | 0.4^{a} | 1.2^{b} | 7.5^{d} | 5.1^{c} |
| SD | 0.10 | 0.05 | 0.48 | 0.33 |
| C18:4 w3 | 0 | 0 | 0.1 | 0.1 |
| C20:0 | 0 | 0 | 0.1 | 0.1 |
| C20:1 | 0.2 | 0.8 | 0.4 | 3.3 |
| C20:2 w6 | 0.1 | 0.1 | 0.1 | 0.1 |
| C20:3 w6 | 0.1 | 0.2 | 0.2 | 0.2 |
| C20:4 w6 | 1.9 | 0.2 | 0.2 | 0.3 |
| C20:5 w3 (EPA) | 0 | 0 | 0.3 | 0.4 |
| C22:6 w3 (DHA) | 1.0 | 1.3^{ab} | 1.6^{b} | 2.2^{c} |
| SD | 0.19 | 0.13 | 0.24 | 0.18 |
| C24:0 | 0.1 | 0.1 | 0.3 | 0.3 |
| Cholesterol %age in yolk | 1.32 | 1.37 | 1.18 | 1.10 |
| Peroxide value m.ekv/g (both determinations) | 0 | 0 | 0 | 0 |

| | | | | |
|---|---|---|---|---|
| ¹⁾SD = standard deviation | | | | |
| ^{a-b} if the figures on the same horizontal line do not have a common letter, the difference between them is significant. | | | | |

The proportion of linolenic acid in the yolk fat was naturally highest in those groups whose feed contained linseed oil. For the group which was given only linseed oil, the increase in the linolenic acid content was nearly 19-fold; for the linseed-fish oil groups, nearly 13-fold; and 3-fold for the turnip rape oil group. The differences between the groups were statistically significant. As for the other omega-3 fatty acids, no EPA was found in the eggs of the basic fodder and turnip rape oil groups, whereas the EPA content in the yolk fat of the linseed oil and linseed-fish oil groups was 0.3 % and 0.4 %, respectively. The amount of DHA was naturally highest (P<0.05) in the yolk fat of the linseed-fish oil group. Linseed oil alone also caused a significant increase of DHA (P<0.05) as compared with the basic fodder. The effect of turnip rape oil was not statistically significant. The total amounts of omega-3 polyunsaturated fatty acids in the yolk fat were as follows:

| | |
|---|---|
| Basic fodder group | 1.4 % |
| Turnip rape oil group | 2.5 % |
| Linseed oil group | 9.5 % |
| Linseed-fish oil group | 7.7 % |

As can be seen from Table 3, the cholesterol concentration in the yolk fat of the eggs of the basic fodder and turnip rape oil groups was of the same order, 1.32 % and 1.37 %. Linseed oil reduced the cholesterol concentration by 11 % (1.18 %) and linseed-fish oil by about 17 % (1.10 %).

In the estimation based on sensory perception, no substantial differences between the groups were observed in the smell, taste or colour of the yolk. Some of the members of the taste test group detected a fishy taste in the eggs of the fish oil group after 4 weeks of storage.

The fat additions in the fodders had an effect on the froth formation properties of the eggs. Turnip rape oil produced a larger amount of froth, but froth stability was best in the case of linseed oil.

### EXAMPLE 2

In this test, 3 t of hen feed is prepared. The raw materials used to produce the fodder are presented in Table 4.

| Taulukko 4 Raw material | wt-% |
|---|---|
| Barley | 45 |
| Oats | 15 |
| Linseed | 15 |
| Coarsely powdered soy | 7.2 |
| Meat-bone meal | 2.8 |
| Fish meal | 1.5 |
| Maize gluten | 2.9 |
| Feeding lime | 3.0 |
| Table salt | 0.1 |
| Lime for chicken | 5.4 |
| Sodium carbonate | 0.25 |
| L-lycine | 0.06 |
| Methionine | 0.11 |
| Phytase | 0.01 |
| Vitamins for hens | 0.25 |
| Trace elements for hens | 0.25 |
| Pancol Yellow | 0.2 |
| Vitamin K | 0.1 |
| Avizyme | 0.06 |
| Total | 100.0 |

The analysis results regarding this fodder are presented in Table 5.

**Table 5**

| Component | wt-% |
|---|---|
| Dry matter | 90 |
| Fat | 7.9 |
| Fodder protein | 7.5 |
| Fodder fibre | 4.9 |
| Ash | 12.6 |
| Calcium | 37 |
| Phosph. | 5.8 |
| Na | 1.5 |
| Cl | 1.7 |
| Lys | 0.8 |
| Met | 0.4 |
| Met+Kys | 0.7 |
| C 18:2w6 | 1.5 |

If desired, instead of linseed it is possible to use a corresponding amount, regarding the α-linolenic acid content, of some other seed with a high α-linolenic acid content, e.g. turnip rape seed.

It can be seen from the experiment that the hen's egg of the invention has a notable advantage in respect of its fatty acid composition, it contains plenty of linolenic acid and its cholesterol concentration is quite low. The oil additions did not cause any oxidation of the yolk fat even during prolonged storage. Furthermore, the change in the fatty acid composition had no effect on the taste of the egg and it improved the froth formation properties of the egg.

## Claims

1. Hen's egg as a foodstuff, which contains α-linolenic acid and antioxidant to prevent oxidation of the α-linolenic acid, **characterized in that** the amount of α-linolenic acid contained in it is 3-15 %, more appropriately 5-12 %, preferably 7-11 % of the fat in the egg.

2. Hen's egg as defined in claim 1, **characterized in that** it contains an increased amount of antioxidant, such as vitamin E, Ethoxyquin, butyl hydroxytoluene, BHA, TBHQ or other antioxidant known in itself.

3. Hen's egg as defined in claim 2, **characterized in that** the amount of vitamin E contained in it is at least 2 - 6 mg/egg.

## Patentansprüche

1. Hühnerei als Nahrungsmittel, welches α-Linolensäure und ein Antioxidationsmittel zum Verhindern der Oxidation der α-Linolensäure enthält, **dadurch gekennzeichnet, dass** die darin enthaltene Menge an α-Linolensäure 3-15 %, zweckmäßiger 5-12 %, vorzugsweise 7-11 % des Fetts in dem Ei beträgt.

2. Hühnerei nach Anspruch 1, **dadurch gekennzeichnet, dass** es eine erhöhte Menge an Antioxidationsmittel, wie etwa Vitamin E, Ethoxyquin, Butylhydroxytoluol, BHA, TBHQ oder ein anderes an sich bekanntes Antioxidationsmittel enthält.

3. Hühnerei nach Anspruch 2, **dadurch gekennzeichnet, dass** die darin enthaltene Menge an Vitamin E mindestens 2-6 mg/Ei beträgt.

## Revendications

1. Oeuf de poule en tant qu'aliment, contenant un acide α-linolénique et un antioxydant afin d'éviter l'oxydation de l'acide α-linolénique, **caractérisé en ce que** la quantité d'acide α-linolénique qu'il contient est de 3 à 15%, de façon plus appropriée de 5 à 12%, et préférablement de 7 à 11% de la matière grasse de l'oeuf.

2. Oeuf de poule selon la revendication 1, **caractérisé en ce qu'**il contient une quantité accrue d'antioxydant, comme la vitamine E, l'éthoxyquine, le butylhydroxytoluène, le BHA, le TBHQ ou un autre antioxydant connu.

3. Oeuf de poule selon la revendication 2, **caractérisé en ce que** la quantité de vitamine E qu'il contient est au moins de 2 à 6 mg/oeuf.
